# EUROPEAN PATENT SPECIFICATION

(11) **EP 1 979 071 B1**
(45) Date of publication and mention of the grant of the patent: **22.09.2010**
(21) Application number: 06829569.0
(22) Date of filing: 13.12.2006
(51) Int. Cl.: B01D 47/10, C01B 17/80, C01B 17/58

(54) **QUENCH SYSTEM FOR METALLURGICAL GASES**
QUENCHSYSTEM FÜR METALLURGISCHE GASE
SYSTEME DE REFROIDISSEMENT DE GAZ METALLURGIQUES

(30) Priority: 02.01.2006 DE 102006000696
(43) Date of publication of application: 15.10.2008
(73) Proprietor: Outotec Oyj, 02200 Espoo (FI)
(72) Inventor: SCHALK, Wolfram, 61267 Neu-Anspach (DE); DAUM, Karl-Heinz, 55124 Mainz (DE); KERSTIENS, Bernd, 61191 Rodheim (DE); SERDARUSIC, Gertrud, 65843 Sulzbach (DE)
(74) Representative: KEIL & SCHAAFHAUSEN Patentanwälte
(86) International application number: PCT/EP2006/011994
(87) International publication number: WO 2007/076921

(56) References cited:
- WO-A-00/56841
- WO-A-03/037790
- FR-A1- 2 452 311
- US-A- 4 469 493
- US-A- 4 957 512
- US-A- 6 019 818

## Description

### Field of the Invention

The present invention relates to a quench system for cooling and possibly cleaning in particular metallurgical gases, which are guided cocurrently with an acid-containing liquid, in particular sulfuric acid, comprising a gas inlet through which the gases are supplied from the top, an annular channel extending around the inner circumference of an upper Venturi portion, over whose inner overflow wall the acid-containing liquid flows over into the Venturi portion, and comprising lateral nozzles provided below the annular channel, through which additional acid-containing liquid is introduced.

Quench systems are used for instance for cooling and in part also for cleaning gases containing SO₂, as they are obtained in metallurgical processes during the smelting of metals, When the gases containing SO₂ are subsequently used for producing sulfuric acid, they must be liberated from solids and impurities before entering the contact region of the sulfuric acid plant. Upon largely separating the dust content, for instance in dust separators, electrostatic precipitators and the like, gas washing is effected in a quench system, for instance in radial-flow scrubbers. In the quench system, the gases are cooled to such an extent that they are suitable for the succeeding equipment, and are in part cleaned. Remaining impurities are partly absorbed in sulfuric acid and separated from the gas stream.

Quenching and simultaneous scrubbing of hot gases is e. g. known from US 6 019 818, in which the hot gases, such as sulphur dioxide, are passed through a packed column, which comprises an entry for quencher/scrubber liquid and an entry for wall irrigation liquid. The wall irrigation liquid is supplied above the entry of the flue gas by tangentially injecting the liquid onto a circular, horizontal shelf. From said shelf the liquid overflows and provides for a uniform irrigation of the wall with a continuous flow of liquid formed by spilling over the edge of the shelf.

US 4 469 493 discloses a method and apparatus for the purification of gases which contain solid and gaseous impurities, wherein the gas is introduced through a pipe into a Venturi, where it is contacted with scrubbing liquid introduced through a main nozzle. Additional tangentially directioned water nozzles rinse the upper cone and the entire inner surface of the Venturi, thereby forming a thin film of water from top to bottom and keeping the inner mantle surface clean. This rinsing water flows into a shelf and then onto the Venturi.

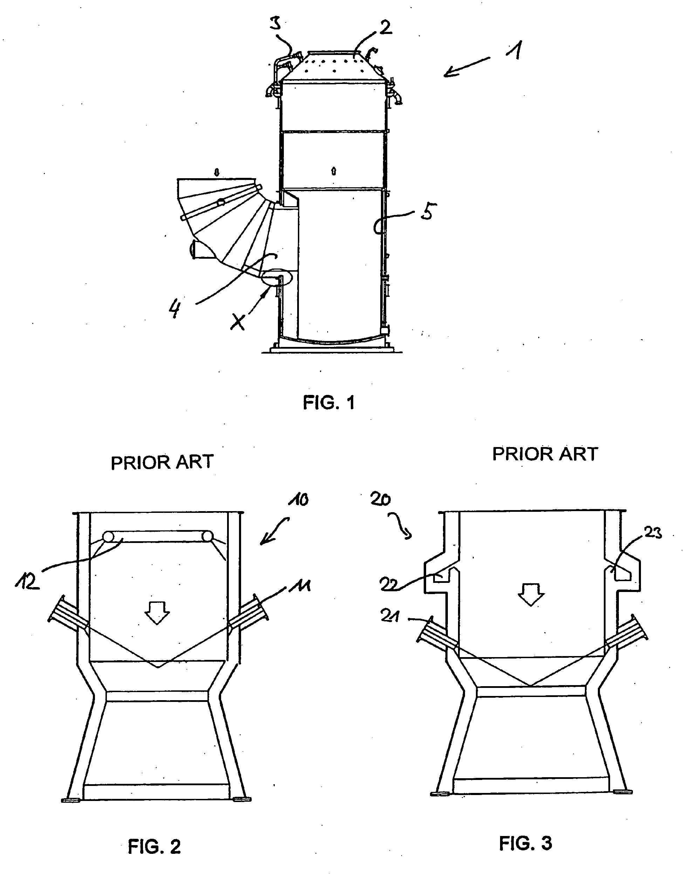

In a conventional quench system 1, as it is shown in Fig. 1, the lid 2 of the tower includes nozzles 3 through which e.g. 25% sulfuric acid is introduced. The hot, SO₂-containing gas to be cleaned is introduced through a gas inlet 4 and guided countercurrently to the sulfuric acid. To be able to resist the waste acid, the quench tower has an acid-resistant lining 5. The material of this lining is chosen corresponding to the respective exposure, and there are materials which are each particularly suitable for exposure to dry/hot or wet/cold conditions. What is always critical here is the transition between the wall portions exposed only to hot, dry gas or only to wet, relatively cold sulfuric acid. In the embodiment shown in Fig. 1, the marked area X at the gas inlet 4 repeatedly includes portions which at times are only exposed to the hot gas and then are exposed to dry/hot conditions or at times are wetted with sulfuric acid and then are exposed to wet/cold conditions. This alternating exposure leads to an increased wear of the lining, so that the same must be replaced.

In alternative embodiments of the quench tower, the SO₂-containing gas is guided cocurrently with the sulfuric acid used for cooling and cleaning. In the embodiment of a Venturi-type quench tower 10 as shown in Fig. 2, the sulfuric acid is injected via lateral nozzles 11 into the gas supplied from the top. Above the nozzles 11, an annular tube 12 is provided, through which additional acid is sprayed against the wall of the Venturi portion, in order to wet the same. This should ensure a clear separation between hot/dry and wet/cold regions. However, corrosion problems lead to a non-uniform wetting of the wall of the Venturi portion and hence undefined regions with wall portions exposed to both dry/hot and wet/cold conditions.

In the Venturi-type quench tower 20 as shown in Fig. 3, the wetting of the wall portions above the lateral nozzles 21 is effected via a circumferential annular duct 22, to which sulfuric acid is supplied. The sulfuric acid flows from the annular duct 22 via an overflow wall 23 into the Venturi portion of the quench tower 20 and is wetting the walls. Due to deposits in the annular duct 22 and due to turbulences caused by the gas stream containing solids, a non-uniform overflow can occur here as well, which can lead to lining zones alternately exposed to dry/hot and wet/cold conditions.

It is the object of the present invention to achieve a uniform liquid film on the wall of the Venturi and a clear separation between dry/hot and wet/cold zones in the Venturi portion to thereby improve the durability of quench towers.

According to the present invention there is provided a quench system comprising the features of claim 1.

Preferred embodiments are evident from the dependent claims.

By means of the invention, the gas flowing from the top through the gas inlet does not impair the overflow of the acid-containing liquid, in particular sulfuric acid, from the annular channel, so that the peripheral wall of the Venturi portion can be uniformly wetted with sulfuric acid. This ensures a clear separation between regions of the wall lining in the vicinity of the gas inlet which are only exposed to dry and hot conditions and regions proceeding from the annular channel which are only exposed to wet and cold conditions. By a corresponding selection of the materials for lining the quench tower the service life thereof can be increased substantially, so that the service intervals can be prolonged.

The known Venturi-type quench towers as shown in Figures 2 and 3, however, have in common that the gas inlet and the Venturi portion before the Venturi throat have the same diameter. The countercurrently operated quench tower 1 of the embodiment as shown in Fig. 1 also has a constant inside diameter.

In accordance with a preferred aspect of the invention, the inside diameter of the upper Venturi portion is greater than the inside diameter of the gas inlet by 5 - 15%, preferably by 7 -10%. This ensures that the sulfuric acid from the annular channel can flow over the overflow wall undisturbed and can uniformly wet the wall of the Venturi portion. With a diameter of the gas inlet of e.g. 2,800 mm, an increase of the inside diameter of the Venturi portion by 100 - 500 mm, preferably by about 300 mm, turned out to be expedient.

In accordance with the present invention, the annular channel is flared towards the top. This provides for a high flow rate at the bottom of the annular channel, which prevents the solids contained in the sulfuric acid from being deposited in the duct. On the other hand, the expansion of the annular channel in the upper portion thereof ensures a low overflow velocity of the sulfuric acid, so that a uniform liquid film is formed on the wall of the Venturi portion.

In accordance with one aspect of this invention, the annular channel is conically flared towards the top, the expansion of the annular channel preferably being achieved by bevelling the outer surface of the overflow wall facing the annular channel on one side. The outer wall of the quench tower then can be provided with a uniform insulation.

It turned out to be expedient to increase the width of the annular channel from its lower portion to its upper portion by 100 - 200%, preferably by about 150%.

To improve the uniform wetting of the peripheral wall of the Venturi portion, the upper edge of the overflow wall preferably is inclined by 20 to 70 °, preferably by 30 to 60 ° and normally about 45° in flow direction of the acid-containing liquid.

In accordance with one aspect of the invention, the annular channel is supplied with sulfuric acid via several, in particular six inlet openings. To achieve a uniform flow, the inlet openings preferably are uniformly distributed about the circumference of the Venturi portion and tangentially open into the annular channel.

In adaptation to the occurring exposure, the walls of the Venturi portion in the vicinity of the gas inlet, the Venturi ceiling and the annular channel are lined with different brick qualities in accordance with the invention. It turned out to be expedient to line the region of the gas inlet with temperature-resistant brick, in particular . nitride-bound silicon carbide brick, which has particularly good properties of resistance to an exposure to hot and dry conditions. On the other hand, the region of the annular channel preferably is lined with carbon/graphite brick, which can easily withstand an exposure to wet and cold conditions. Graphite brick has a good thermal-shock and acid resistance, so that this slightly more expensive material preferably is used in the vicinity of the Venturi ceiling and/or the transition from the gas inlet to the Venturi ceiling as well as possibly at the top of the overflow wall.

As the cements or mortars used for walling up the lining bricks also can easily withstand an exposure to either dry/hot or wet/cold conditions, the bricks for lining the walls of the gas inlet, the Venturi ceiling and the annular channel are laid by using different cement or mortar qualities adapted to the respective exposure profiles, in accordance with one embodiment of the invention.

The invention will subsequently be explained in detail with reference to an embodiment and the drawing. All features described and/or illustrated per se or in any combination form the subject-matter of the invention, independent of their inclusion in the claims or their back-reference.

### Brief Description of the Drawings

- Fig. 1: shows a schematic representation of a conventional quench tower which is operated countercurrently.
- Fig.2: shows a schematic representation of a conventional Venturi-type quench tower which is operated cocurrently.
- Fig. 3: shows a schematic representation of another conventional Venturi- type quench tower which is operated cocurrently.
- Fig. 4: shows a schematic representation of the quench system in accor- dance with the present invention.
- Fig. 5 -: shows an enlarged partial section through the quench system as shown in Fig. 4 in the vicinity of the annular channel.
- Fig. 6: shows a section along line VI-VI of Fig. 4, and
- Fig. 7: schematically shows the retrofitting of a conventional quench tower with the present invention.

### Description of the Preferred Embodiment

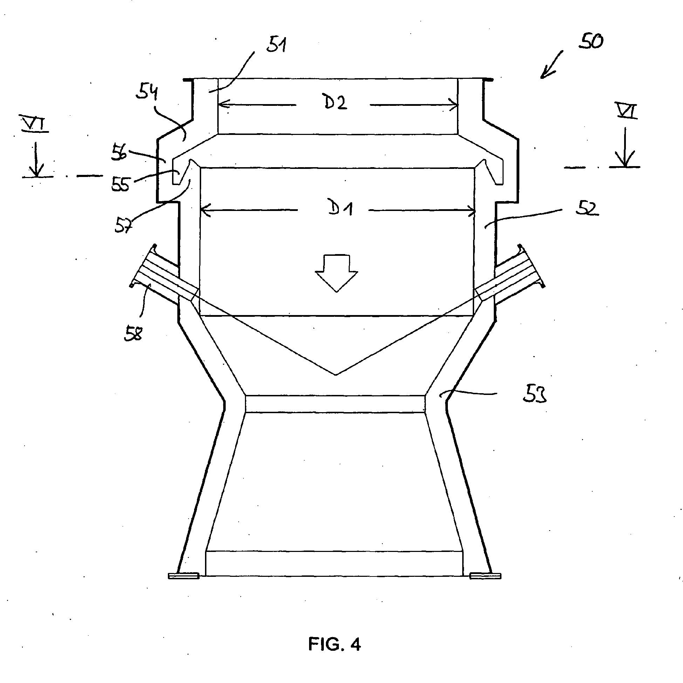

Figures 4 to 6 schematically show a Venturi-type quench system in accordance with the present invention.

At its upper end, the venturi 50 comprises a gas inlet 51, an adjoining upper Venturi portion 52 and the succeeding Venturi throat 53. In the illustrated embodiment, the inside diameter D1 of the upper Venturi portion 52 is greater than the inside diameter D2 of the gas inlet 51 by about 7.5%. The dimensioning of the flared portion depends on the total size of the plant. The transition between the different diameters is referred to as Venturi ceiling 54.

Below the Venturi ceiling 54, a groove-like annular channel 55 extending around the Venturi portion 52 is provided. The annular channel 55 is defined by the outer wall 56 of the venturi 50 and an overflow wall 57. Below the annular channel 55, at the end of the upper Venturi portion 52, several, e.g. eight lateral nozzles 58 uniformly distributed about the circumference of the venturi 50 are provided for injecting sulfuric acid. The nozzles 58 preferably are 60° nozzles, which inject and atomize the sulfuric acid with a pressure loss of about 1-2 bar.

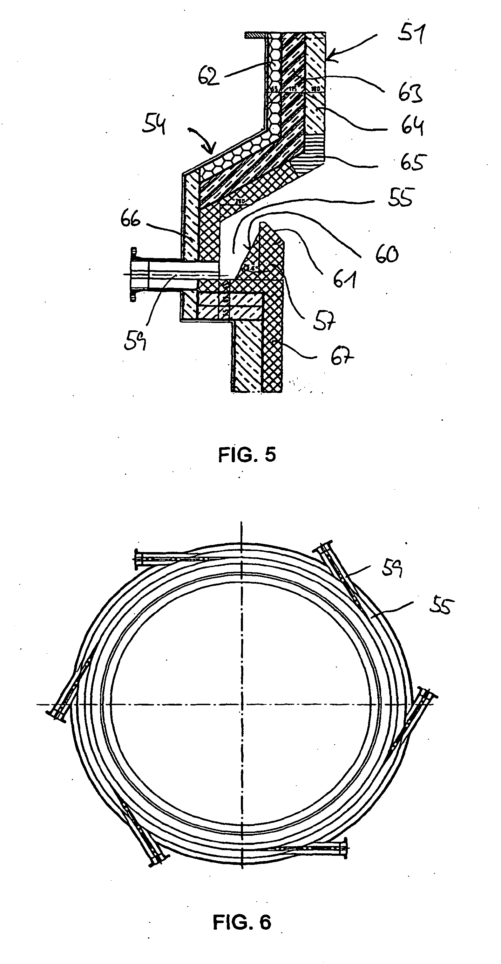

As can be taken in particular from Fig. 6, several, in particular six inlet openings 59 uniformly distributed about the circumference of the venturi 50 tangentially open into the annular channel 55 for supplying sulfuric acid.

As is shown best in Fig. 5, the lower portion of the annular channel 55, into which open the inlet openings 59, has a relatively small width of e.g. 80 mm, which approximately corresponds to the opening cross-section of the inlet openings 59. Towards the top, the annular channel 55 is flared uniformly due to the bevelling of the outer surface 60 of the overflow wall 57, until it has a width of e.g. 200 mm at its upper end; which corresponds to an expansion of the annular channel 55 by 150 %. The upper edge 61 of the overflow wall 57, which leads to the upper Venturi portion 52, is inclined downwards by about 45°.

The venturi 50 is walled up in several layers with linings adapted to the respective exposure to the introduced gas or sulfuric acid, which are shown in Fig. 5. In the vicinity of the gas inlet 51, there is provided from the outside to the inside first a simple insulating brick or foam glass 62, then a refractory insulating brick (lightweight firebrick) 63 and finally a temperature-resistant nitride-bound silicon carbide brick 64. In the vicinity of the Venturi ceiling 54, and in particular in the transitional region between the gas inlet 51 and the Venturi ceiling 54, a graphite brick 65, e.g. - as a shaped graphite ceiling brick, is provided instead of the silicon carbide brick. In Fig. 5, the graphite brick 65 merely is provided in the transitional region between the gas inlet 51 and the Venturi ceiling 54, but it can also extend over that part of the Venturi ceiling 54 which is arranged above the annular channel 55. In the vicinity of the annular channel 55 and of the upper Venturi portion 52, there is first provided a layer of acid-resistant standard bricks 66 on the outside, which is adjoined by a layer of carbon bricks 67. The overflow wall 57 also consists of carbon bricks 67, e.g. in the form of a carbon wedge brick. If necessary, the top of the overflow wall 57, which gets in contact with the gas stream, can also be made of graphite brick. Corresponding to the exposure, the linings are walled up with different kinds of cement or mortar.

The venturi 50 of the quench system of the present invention substantially is designed as described above. Its operation will be explained below.

Hot gas containing SO₂, which originates from a metallurgical plant, is supplied to the venturi 50 from the top through the gas inlet 51. Cooling and cleaning the gas stream is effected by means of sulfuric acid, which primarily is injected via the lateral nozzles 58 and cools the gas stream, so that the same can be supplied to the further equipment and then to a sulfuric acid contact plant. At the same time, impurities are absorbed and dust particles are bound.

Sulfuric acid likewise is supplied to the circumferential annular channel 55 arranged above the lateral nozzles 58, which sulfuric acid flows over the overflow wall 57 and wets the wall of the upper Venturi portion 52. Due to the flaring cross-section of the annular channel 55, the sulfuric acid in the lower portion of the annular channel 55 flows with a relatively high flow rate, so that solids contained in the sulfuric acid are kept in suspension and cannot settle. Due to the flaring cross-section of the annular channel 55, the flow rate is decreasing towards the top and in the upper region only is about 30 - 40% of the feed rate through the inlet openings 59, so that the sulfuric acid can slowly flow over the overflow wall 57 and uniformly wet the wall of the upper Venturi portion 52. This ensures that a uniform liquid film is formed at the upper Venturi portion 52, so that the lining 67 is exclusively exposed to wet and cold conditions in this region. In the vicinity of the gas inlet 51, however, only the hot and dry gas gets in contact with the lining 64.

The increased diameter D1 of the upper Venturi portion 52 ensures that the gas stream does not impair and rip up the liquid film on the wall of the upper Venturi portion 52. In this way, a clear separation is achieved between wall regions exposed exclusively to hot and dry conditions and exclusively to wet and cold conditions. This prolongs the service life of the lining and hence the service intervals.

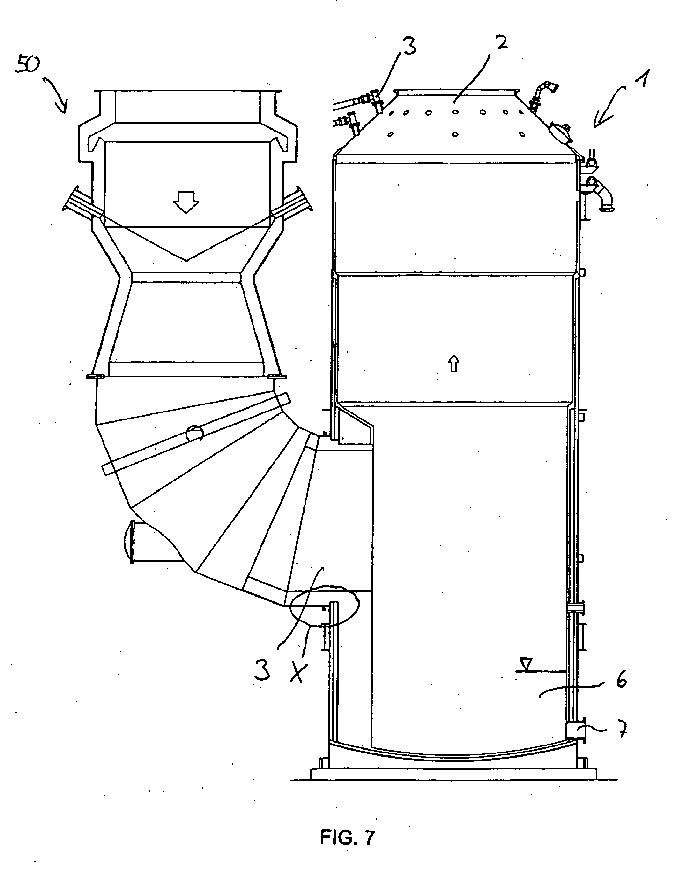

Fig. 7 shows how a conventional quench tower 1, which previously was operated for instance according to the embodiment as shown in Fig. 1, can be retrofitted with the invention. The venturi 50 in accordance with the present invention is provided upstream of the gas inlet 3 as shown in Fig. 1 and mounted laterally on the inlet opening of the quench tower 1. The gas guided cocurrently with sulfuric acid flows through the venturi 50 and then enters the existing quench tower 1, which the gas leaves through the upper outlet opening, in order to be supplied for instance to a succeeding gas cleaning. The sulfuric acid is withdrawn from the sump 6 of the quench tower 1 and discharged via conduit 7. The nozzles 3, which in the previous quench tower 1 are provided in the ceiling 2 of the quench tower, are for instance only operated for 50%. In addition, emergency water nozzles for the further cooling of the gas stream are provided in the ceiling of the quench tower, in case said gas stream still is too hot to be supplied to the succeeding plastic elements. Since the existing quench tower is retrofitted with the venturi of the invention, a lining suited for a corresponding exposure can also be used in the problematic zone X at the transition from the gas inlet into the quench tower, which lining is not damaged by an alternating exposure.

### Example:

In a quench tower in accordance with the invention, the inside diameter D1 of the upper Venturi portion 52 is about 3000 mm and is greater than the inside diameter D2 in the vicinity of the gas inlet 51 by about 200 mm.

Via the gas inlet 51, about 200,000 Nm³/h of gas containing SO₂ with a temperature of about 350°C are introduced. For cooling and cleaning the gas, a total of about 450 m³/h of maximally 25% sulfuric acid with a temperature of 60-70°C are supplied, and for instance 370-390 m³/h are supplied via the nozzles 58 and correspondingly 60-80 m³/h via the annular channel. In the nozzles 58, the sulfuric acid is atomized with a pressure loss of 1-2 bar. The sulfuric acid is introduced into the annular channel 55 with a flow rate of about 1-2 m/s, so that the solids contained in the sulfuric acid (not more than 10 g/l) are kept in suspension in the lower portion of the annular channel 55 and cannot settle. In the lower portion, the width of the annular channel is about 80 mm and is flared towards the top to about 200 mm. This reduces the flow rate of the sulfuric acid in the upper portion of the annular channel when flowing over into the upper Venturi portion 52 to about 40% of the feed rate. This provides for a uniform wetting of the upper Venturi portion 52.

### List of Reference Numerals:

- 1: quench tower
- 2: lid
- 3: nozzle
- 4: gas inlet
- 5: acid-resistant lining
- 6: sump
- 7: conduit
- 10: quench tower
- 11: nozzle
- 12: annular tube
- 20: quench tower
- 21: nozzle
- 22: annular channel
- 23: overflow wall
- 50: venturi
- 51: gas inlet
- 52: upper Venturi portion
- 53: Venturi throat
- 54: Venturi ceiling
- 55: annular channel
- 56: outer wall
- 57: overflow wall
- 58: nozzle
- 59: inlet opening
- 60: outer surface
- 61: upper edge
- 62: foam glass
- 63: refractory insulating brick
- 64: silicon carbide brick
- 65: graphite brick
- 66: acid-resistant brick
- 67: carbon brick

- D1: inside diameter of the upper Venturi portion 52
- D2: inside diameter of the gas inlet 51

## Claims

1. A quench system for cooling and/or cleaning in particular metallurgical gases, which are guided cocurrently with an acid-containing liquid, in particular sulfuric acid, comprising:
a gas inlet (51), through which the gases are supplied from the top,
an annular channel (55) extending about the inner circumference of an upper Venturi portion (52) and comprising an inner overflow wall (57) over which the acid-containing liquid can flow into the upper Venturi portion (52), and
lateral nozzles (58) provided below the annular channel (55) for introducing additional acid-containing liquid,
wherein the inside diameter (D1) of the upper Venturi portion (52) is greater than the inside diameter (D2) of the gas inlet (51), and
wherein the annular channel (55) is flared towards the top.

2. The quench system as claimed in claim 1, **characterized in that** the inside diameter (D1) of the upper Venturi portion (52) is greater than the inside diameter (D2) of the gas inlet (51) by 5 to 15%, preferably 7 to 90%.

3. The quench system as claimed in claim 2, **characterized in that** the inside diameter (D1) of the upper Venturi portion (52) is greater than the inside diameter (D2) of the gas inlet (51) by 100 to 500 mm, preferably about 200 to 400 mm.

4. The quench system as claimed in any of the preceding claims, **characterized in that** the expansion of the annular channel (55) is achieved by bevelling the outer surface (60) of the overflow wall (57) facing the annular channel (55).

5. The quench system as claimed in any of the preceding claims, **characterized in that** the width of the annular channel (55) is increased from its lower end to its upper end by 100 to 200%, preferably about 150%.

6. The quench system as claimed in any of the preceding claims, **characterized in that** the upper edge (61) of the overflow wall (57) preferably is inclined by 20 to 70 °, preferably by 30 to 60 ° and normally about 45° in flow direction of the acid-containing liquid.

7. The quench system as claimed in any of the preceding claims, **characterized in that** a plurality of inlet openings (59) for the acid-containing liquid tangentially open into the annular channel (55).

8. The quench system as claimed in claim 7, **characterized in that** the inlet openings (59) are uniformly distributed about the circumference of the Venturi portion (52).

9. The quench system as claimed in any of the preceding claims, **characterized in that** the walls of the venturi (50) in the vicinity of the gas inlet (51), the Venturi ceiling (54) and the annular channel (55) are lined with different brick qualities.

10. The quench system as claimed in any of the preceding claims, **characterized in that** the region of the gas inlet (51) is lined with temperature-resistant brick, in particular silicon carbide brick.

11. The quench system as claimed in any of the preceding claims, **characterized in that** the region of the annular channel (55) is lined with carbon/graphite brick.

12. The quench system as claimed in any of the preceding claims, **characterized in that** the region of the Venturi ceiling (54) and/or the transitional region from the gas inlet (51) to the Venturi ceiling (54) is lined with graphite brick.

13. The quench system as claimed in any of the preceding claims, **characterized in that** the bricks for lining the walls of the gas inlet (51), the Venturi ceiling (54) and the annular channel (55) are laid with different qualities of cement or mortar.

## Patentansprüche

1. Ein Quenchsystem zum Kühlen und/oder Reinigen insbesondere metallurgischer Gase, die im Gleichstrom mit einer säurehaltigen Flüssigkeit, insbesondere Schwefelsäure, geführt werden, mit:
einem Gaseinlass (51), über den die Gase von oben zugeführt werden,
einem Ringkanal (55), der sich um den Innenumfang eines oberen Venturiabschnitts (52) erstreckt und eine innere Überlaufwand (57) aufweist, über welche die säurehaltige Flüssigkeit in den oberen Venturiabschnitt (52) fließen kann, und seitlichen Düsen (58), die unterhalb des Ringkanals (55) vorgesehen sind, um zusätzliche säurehaltige Flüssigkeit einzubringen,
wobei der Innendurchmesser (D1) des oberen Venturiabschnitts (52) größer ist als der Innendurchmesser (D2) des Gaseinlasses (51), und
wobei der Ringkanal (55) sich nach oben erweitert.

2. Das Quenchsystem nach Anspruch 1, **dadurch gekennzeichnet, dass** der Innendurchmesser (D1) des oberen Venturiabschnitts (52) um 5-15 %, vorzugsweise 7-10 % größer ist als der Innendurchmesser (D2) des Gaseinlasses (51).

3. Das Quenchsystem nach Anspruch 2, **dadurch gekennzeichnet, dass** der Innendurchmesser (D1) des oberen Venturiabschnitts (52) um 100-500 mm, vorzugsweise etwa 200-400 mm, größer ist als der Innendurchmesser (D2) des Gaseinlasses (51).

4. Das Quenchsystem nach einem der vorhergehenden Ansprüche, **dadurch gekennzeichnet, dass** die Erweiterung des Ringkanals (55) durch eine Abschrägung der dem Ringkanal (55) zugewandten Außenfläche (60) der Überlaufwand (57) erreicht wird.

5. Das Quenchsystem nach einem der vorhergehenden Ansprüche, **dadurch gekennzeichnet, dass** sich die Breite des Ringkanals (55) von seinem unteren zu seinem oberen Ende um 100-200 %, vorzugsweise etwa 150 % erhöht.

6. Das Quenchsystem nach einem der vorhergehenden Ansprüche, **dadurch gekennzeichnet, dass** die Oberkante (61) der Überlaufwand (57) vorzugsweise um 20-70 °, vorzugsweise um 30-60 ° und normalerweise um etwa 45 ° in Fließrichtung der säurehaltigen Flüssigkeit geneigt ist.

7. Das Quenchsystem nach einem der vorhergehenden Ansprüche, **dadurch gekennzeichnet, dass** mehrere Einlassöffnungen (59) für die säurehaltige Flüssigkeit tangential in den Ringkanal (55) einmünden.

8. Das Quenchsystem nach Anspruch 7, **dadurch gekennzeichnet, dass** die Einlassöffnungen (59) gleichmäßig über den Umfang des Venturiabschnitts (52) verteilt sind.

9. Das Quenchsystem nach einem der vorhergehenden Ansprüche, **dadurch gekennzeichnet, dass** die Wände des Venturi (50) im Bereich des Gaseinlasses (51), der Venturidecke (54) und des Ringkanals (55) mit unterschiedlichen Steinqualitäten ausgekleidet sind.

10. Das Quenchsystem nach einem der vorhergehenden Ansprüche, **dadurch gekennzeichnet, dass** der Bereich des Gaseinlasses (51) mit temperaturbeständigem Stein, insbesondere Siliziumkarbidstein, ausgekleidet ist.

11. Das Quenchsystem nach einem der vorhergehenden Ansprüche, **dadurch gekennzeichnet, dass** der Bereich des Ringkanals (55) mit Kohlenstoff-/Graphitstein ausgekleidet ist.

12. Das Quenchsystem nach einem der vorhergehenden Ansprüche, **dadurch gekennzeichnet, dass** der Bereich der Venturidecke (54) und/oder der Übergangsbereich vom Gaseinlass (51) zu der Venturidecke (54) mit Graphitstein ausgekleidet ist.

13. Das Quenchsystem nach einem der vorhergehenden Ansprüche, **dadurch gekennzeichnet, dass** die Steine zur Auskleidung der Wände des Gaseinlasses (51), der Venturidecke (54) und des Ringkanals (55) mit unterschiedlichen Kitt- oder Mörtelqualitäten verlegt sind.

## Revendications

1. Système de trempe pour refroidir et/ou nettoyer notamment des gaz métallurgiques, qui sont guidés à co-courant avec un liquide contenant de l'acide, en particulier de l'acide sulfurique, comprenant :
une entrée de gaz (51), à travers laquelle les gaz sont envoyés depuis le sommet,
un canal annulaire (55) s'étendant sur la circonférence interne d'une partie Venturi supérieure (52) et comprenant une paroi de déversement interne (57) sur laquelle le liquide contenant de l'acide peut s'écouler dans la partie Venturi supérieure (52), et
des buses latérales (58) agencées sous le canal annulaire (55) pour introduire un autre liquide contenant de l'acide,
dans lequel le diamètre interne (D1) de la partie Venturi supérieure (52) est supérieur au diamètre interne (D2) de l'entrée de gaz (51), et
dans lequel le canal annulaire (55) s'évase vers le sommet.

2. Système de trempe tel que revendiqué dans la revendication 1, **caractérisé en ce que** le diamètre interne (D1) de la partie Venturi supérieure (52) est supérieur au diamètre interne (D2) de l'entrée de gaz (51) de 5 à 15 %, de préférence de 7 à 10 %.

3. Système de trempe tel que revendiqué dans la revendication 2, **caractérisé en ce que** le diamètre interne (D1) de la partie Venturi supérieure (52) est supérieur au diamètre interne (D2) de l'entrée de gaz (51) de 100 à 500 mm, de préférence d'environ 200 à 400 mm.

4. Système de trempe tel que revendiqué dans l'une quelconque des revendications précédentes, **caractérisé en ce que** l'expansion du canal annulaire (55) est obtenue en biseautant la surface externe (60) de la paroi de déversement (57) faisant face au canal annulaire (55).

5. Système de trempe tel que revendiqué dans l'une quelconque des revendications précédentes, **caractérisé en ce que** la largeur du canal annulaire (55) entre son extrémité inférieure et son extrémité supérieure est augmentée de 100 à 200 %, de préférence d'environ 150 %.

6. Système de trempe tel que revendiqué dans l'une quelconque des revendications précédentes, **caractérisé en ce que** le bord supérieur (61) de la paroi de déversement (57) est de préférence incliné de 20 à 70°, de préférence de 30 à 60° et normalement d'environ 45° dans le sens d'écoulement du liquide contenant de l'acide.

7. Système de trempe tel que revendiqué dans l'une quelconque des revendications précédentes, **caractérisé en ce qu'**une pluralité d'orifices d'entrée (59) pour le liquide contenant de l'acide s'ouvrent de manière tangentielle dans le canal annulaire (55).

8. Système de trempe tel que revendiqué dans la revendication 7, **caractérisé en ce que** les orifices d'entrée (59) sont uniformément répartis sur la circonférence de la partie Venturi (52).

9. Système de trempe tel que revendiqué dans l'une quelconque des revendications précédentes, **caractérisé en ce que** les parois du Venturi (50) à proximité de l'entrée de gaz (51), du plafond Venturi (54) et du canal annulaire (55) sont alignées avec différentes qualités de brique.

10. Système de trempe tel que revendiqué dans l'une quelconque des revendications précédentes, **caractérisé en ce que** la région de l'entrée de gaz (51) est alignée avec une brique résistante à la température, en particulier en brique de carbure de silicium.

11. Système de trempe tel que revendiqué dans l'une quelconque des revendications précédentes, **caractérisé en ce que** la région du canal annulaire (55) est alignée avec une brique de carbone/graphite.

12. Système de trempe tel que revendiqué dans l'une quelconque des revendications précédentes, **caractérisé en ce que** la région du plafond Venturi (54) et/ou la région de transition située entre l'entrée de gaz (51) et le plafond Venturi (54) est alignée avec la brique de graphite.

13. Système de trempe tel que revendiqué dans l'une quelconque des revendications précédentes, **caractérisé en ce que** les briques permettant d'aligner les parois de l'entrée de gaz (51), le plafond Venturi (54) et le canal annulaire (55) sont alignées avec différentes qualités de ciment ou de mortier.
